# EUROPEAN PATENT APPLICATION

(11) **EP 4 322 178 A1**
(43) Date of publication of application: **14.02.2024**
(21) Application number: 23173234.8
(22) Date of filing: 12.05.2023
(51) Int. Cl.: G21C 13/02, G21C 9/004, G21F 9/02, B01D 53/14

(54) **FILTERED CONTAINMENT VENTING SYSTEM**

(30) Priority: 10.08.2022 JP 2022128530
(71) Applicant: HITACHI-GE NUCLEAR ENERGY, LTD., Hitachi-shi Ibaraki 317-0073 (JP)
(72) Inventor: FUKUI, Sohei, 317-0073 Ibaraki (JP); WADA, Yoichi, 317-0073 Ibaraki (JP); TOMINAGA, Kazuo, 317-0073 Ibaraki (JP); TANAKA, Motoi, 317-0073 Ibaraki (JP); TANAKA, Masaaki, 317-0073 Ibaraki (JP); NUNOKAWA, Daiki, 317-0073 Ibaraki (JP)
(74) Representative: Mewburn Ellis LLP

(57) **Abstract**

A filtered containment venting system (30) includes a filtered containment venting tank (1) having: an organic iodine remover (2) for collecting organic iodine; scrubbing water (13) for collecting inorganic iodine; and an alkalizing agent (3) for adding an action of buffering a pH value to the scrubbing water (13).

## Description

### TECHNICAL FIELD

The present invention relates to a filtered containment venting system.

### BACKGROUND ART

Reactor facility is provided with a filtered containment venting system in order to prevent radioactive materials, spewing from a reactor, from leaking to the environment. If pressure inside a containment abnormally increases by core damage due to a reactor accident, the containment is broken, leading to large-scale leakage, so that the filtered containment venting system is used to preliminarily vent steam inside the containment, to prevent the containment from being damaged due to overpressurization. When spewed from the reactor to the inside of the containment, high-temperature and high-pressure steam is passed into the filtered containment venting system to have major radioactive materials collected before being discharged into the air.

Radioactive materials spewed in the event of a reactor accident include noble gases, aerosols, inorganic iodine, and organic iodine. These radioactive materials except noble gases are trapped by the filtered containment venting system and prevented from being discharged to the environment. In general, the filtered containment venting system retains scrubbing water working as a wet filter and additionally has a fiber filter as a dry filter, inside a filtered containment venting tank, as described in Japanese Translation of PCT International Application Publication No. 2015-522161 A (hereinbelow, referred to as Patent Document 1).

Scrubbing water may sometimes have chemical solution added into the water and vented steam is discharged into the scrubbing water. By reaction with the chemical solution, ionized inorganic iodine (elemental iodine) and aerosols are dissolved into the scrubbing water, and collected therein. Additionally, a part of aerosols discharged through the scrubbing water to a gas phase adheres to or collides with, and then collected by, the fiber filter.

In contrast, organic iodine including methyl iodide is poorly-soluble in water and thus is not sufficiently collected even when introduced into pooled water in a pressure suppression chamber or the scrubbing water in the event of venting. In addition, organic iodine such as methyl iodide may newly produced by reaction of elemental iodine in exhaust process from the reactor. From these reasons, a filtered containment venting system is required that is capable of effectively collecting organic iodine. Japanese Patent Application Publication No. H07-209488 A (hereinbelow, referred to as Patent Document 2), for example, describes a filtered containment venting system provided, on a vent path in the filtered containment venting system, with a dry filter of silver zeolite or activated carbon for collecting organic iodine.

An organic-iodine remover such as silver zeolite and activated carbon likely has collecting efficiency reduced when water is adhered thereto, so that a mechanism to remove water is required if there is a concern about effect of water, to complicate a structure of the filtered containment venting system. In addition, such an organic-iodine remover is solid and requires specialized device design or a complicated device structure, as in Patent Document 2.

A technique to resolve the problems is disclosed in Japanese Patent No. 6628313 B2 (hereinbelow, referred to as Patent Document 3), for example. Patent Document 3 describes providing ionic liquid, as non-volatile liquid (organic-iodine remover) for collecting organic iodine, in a filtered containment venting tank of a filtered containment venting system. The invention of Patent Document 3 uses this organic-iodine remover to trap radioactive materials, except noble gases, only with the filtered containment venting tank, without any complicated device structure, to prevent the radioactive materials from being discharged to the environment

### SUMMARY OF THE INVENTION

### Problems to Be Solved

A conventional filtered containment venting system reduces and removes inorganic iodine through inclusion of compound (reductant) in scrubbing water to reduce and remove inorganic iodine, and physically removes aerosols (particles). The organic-iodine remover described in Patent Document 3 is more prevented from decomposition in scrubbing water with a lower pH value, under high-temperature and high-dose radiation in the event of venting.

In the event of venting, radioactive materials flows into the filtered containment venting tank to cause the organic-iodine remover and the scrubbing water including reductant to be exposed to high-temperature and high-dose radiation, to reduce a pH value of the scrubbing water. However, the scrubbing water with a pH value of 6.5 or less accelerates decomposition of the reductant. Additionally, the more a pH value is reduced, the less the scrubbing water collects inorganic iodine. Increasing an initial pH value for preventing such phenomena, on the other hand, accelerates decomposition of organic iodine remover (ionic liquid), to fail to retain performance of removing organic iodine at a high level.

The present invention has been devised in view of the above-described situation. The present invention is intended to provide a filtered containment venting system capable of preventing decomposition of organic iodine remover and decomposition of a compound to reduce and remove inorganic iodine under high-temperature and high-dose radiation.

### Solution to Problems

A filtered containment venting system according to the present invention, solving the above-identified problems, includes a filtered containment venting tank having: an organic iodine remover for collecting organic iodine; scrubbing water for collecting inorganic iodine; and an alkalizing agent for adding an action of buffering a pH value to the scrubbing water.

### Advantageous Effects of the Invention

The present invention provides a filtered containment venting system capable of preventing decomposition of organic iodine and decomposition of a compound to reduce and remove inorganic iodine under high-temperature and high-dose radiation. Objectives, configurations, and advantageous effects other than those described above are disclosed through embodiments to be described below.

### BRIEF DESCRIPTION OF THE DRAWINGS

FIG. 1 is a schematic diagram showing a configuration of a filtered containment venting system according to a first embodiment of the present invention;
FIG. 2 is a schematic diagram showing a configuration of a filtered containment venting system according to a second embodiment of the present invention;
FIG. 3 is a schematic diagram showing a configuration example of a filtered containment venting system according to a third embodiment of the present invention;
FIG. 4 is a schematic diagram showing another configuration example of the filtered containment venting system according to the third embodiment of the present invention;
FIG. 5 is a schematic diagram showing a configuration example of a filtered containment venting system according to a fourth embodiment of the present invention;
FIG. 6 is a schematic diagram showing a configuration of a filtered containment venting system according to a fifth embodiment of the present invention;
FIG. 7 is a chart showing decomposition performance of an organic iodine remover and chemical solution, where the horizontal axis indicates a pH value and the vertical axis indicates residual after decomposition (%);
FIG. 8 is a schematic diagram showing a configuration example of a filtered containment venting system according to a sixth embodiment of the present invention;
FIG. 9 is a schematic diagram showing another configuration example of the filtered containment venting system according to the sixth embodiment of the present invention;
FIG. 10 is a schematic diagram showing a configuration of a filtered containment venting system according to a seventh embodiment of the present invention; and
FIG. 11 is a schematic diagram showing a modification of a filtered containment venting system according to the present invention.

### DETAILED DESCRIPTION OF EMBODIMENTS

Hereinbelow, filtered containment venting systems according to embodiments of the present invention are described in detail, with reference to the drawings as required. Note that substantially the same or similar components are denoted by the same reference sign and duplicate descriptions may be avoided in the following description of the embodiments.

### First Embodiment

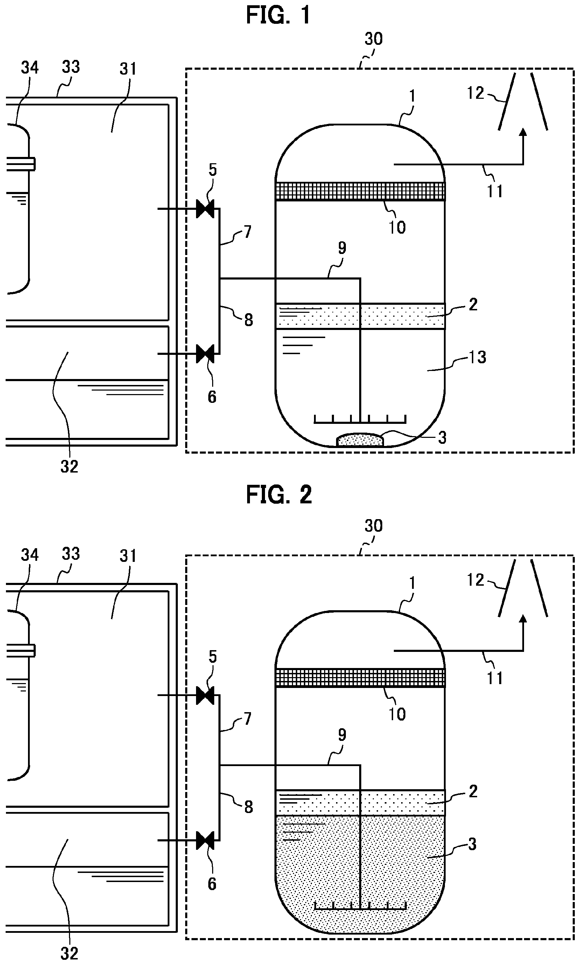

FIG. 1 is a schematic diagram showing a configuration of a filtered containment venting system 30 according to a first embodiment of the present invention. In FIG. 1, the filtered containment venting system 30 is used when gas within a containment 33, having a dry well 31 and a wet well 32, is discharged into the air in the event of a severe accident, such as a reactor pressure vessel 34 being damaged, in order to reduce pressure in the containment 33, to remove radioactive materials in the gas as much as possible.

The filtered containment venting system 30 according to the present embodiment includes a filtered containment venting tank 1, as shown in FIG. 1. The filtered containment venting tank 1 includes an organic iodine remover 2, scrubbing water 13, and an alkalizing agent 3.

The organic iodine remover 2 collects and removes organic iodine. The organic iodine remover 2 acts to dissolve and decompose organic iodine as a radioactive material, and retain organic iodine as iodide ion. Materials used as the organic iodine remover 2 is to be described below. The organic iodine remover 2 is hydrophobic and is not compatible with scrubbing water 13.

The scrubbing water 13 dissolves and collects inorganic iodine. Note that the filtered containment venting system 30 in FIG. 1 is illustrated to store the scrubbing water 13 within the filtered containment venting tank1, but the scrubbing water 13 only needs to be stored within the filtered containment venting tank 1 in the event of venting and thus may not be stored within the filtered containment venting tank 1 while the reactor is in normal operation. That is, the scrubbing water 13 within the filtered containment venting tank 1 may already have been filled before the venting or may be generated through condensation of steam flowing into the filtered containment venting tank1 in the event of venting. Preliminarily storing the scrubbing water 13 within the filtered containment venting tank 1 allows for immediately collecting inorganic iodine in the event of an accident. In the case of not storing the scrubbing water 13 within the filtered containment venting tank 1 until the event of venting, the organic iodine remover 2 and alkalizing agent 3 are less likely retrograded.

The alkalizing agent 3 adds an action of buffering a pH value to the scrubbing water 13. The alkalizing agent 3 is a compound to reduce and remove inorganic iodine, and causes the scrubbing water 13 to have an action of collecting inorganic iodine through inclusion of the agent in the scrubbing water 13. A compound used as the alkalizing agent 3 is described below.

The filtered containment venting system 30 includes: a dry well venting pipe 7 and a wet well venting pipe 8, which are coupled to the containment 33; and an inlet pipe 9, one end of which is coupled to the dry well venting pipe 7 and wet well venting pipe 8 and the other end of which is positioned down below within the filtered containment venting tank 1. The dry well venting pipe 7 is provided with a separation valve 5. The wet well venting pipe 8 is provided with a separation valve 6. Additionally, the filtered containment venting system 30 includes: a fiber filter 10 positioned up above within the filtered containment venting tank 1; and an outlet pipe 11, one end of which is positioned downstream of the fiber filter 10 or above the fiber filter 10 and the other end of which is coupled to an exhaust tube 12 outside of the filtered containment venting tank 1. The filtered containment venting tank 1 configured as described above is used to collect aerosols, inorganic iodine, and organic iodine as radioactive materials.

Even though there may be differences between output levels of individual plants and accident scenarios, it is evaluated that radioactive materials spewed in the event of an accident includes about 1 kg of organic iodine and about 20 kg of inorganic iodine at a severe accident accompanied with a fuel failure, such as the reactor pressure vessel 34 being damaged. It is evaluated that methyl iodide (CH₃I) would primarily be spewed as organic iodine. It is also evaluated that molecular iodine (I₂) would primarily be spewed as inorganic iodine.

Based on these, the present embodiment uses a material composed of a cation and an anion only, as the organic iodine remover 2 which is hydrophobic and has properties of collecting organic iodine. Used as the organic iodine remover 2 is liquid that is substantially involatile at a temperature of about 160°C or less. Venting steam at a temperature in a range of about 100 to 160°C is assumed in the event of a reactor accident. When the liquid working as a wet filter is involatile, liquid itself is prevented from being volatilized even if high-temperature and high-pressure gas is introduced in the event of venting. It is preferable that the organic iodine remover 2 is substantially involatile at a temperature of less than 200°C. The organic iodine remover 2 only needs to be liquid at a temperature in the event of venting and thus can be solid at a room temperature, but is preferably liquid. Additionally, the organic iodine remover 2 is preferably liquid (X⁺-Y⁻) composed of a combination of a cation (X⁺) and an anion (Y⁻) only. The organic iodine remover 2 as described above can have high performance of collecting organic iodine by way of a 3-stage (1: dissolution, 2: decomposition, and 3: retention) mechanism to be described below.

The alkalizing agent 3 can be solid or liquid under a room temperature and barometric pressure before venting as well as under high temperature and high pressure in the event of venting. Having the alkalizing agent 3 allows for preventing variation in pH value of the scrubbing water 13 under high-temperature irradiation within the filtered containment venting tank 1, to avoid the scrubbing water 13 from being extremely acidified (pH 4 or less, for example) or alkalified (pH 12.5 or more, for example). Accordingly, the organic iodine remover 2 is prevented from being decomposed throughout predominant venting, to have high performance of collecting organic iodine. Additionally, the alkalizing agent 3 acts to supply hydroxide ion (OH⁻) to the scrubbing water 13 and acts to buffer a pH value by interacting with an acid material such as a proton (H⁺) in the scrubbing water 13, to have high performance of collecting inorganic iodine.

Note that room temperature molten salt, ionic liquid, quaternary salt, surfactant, correlation transfer catalyst, or a mixture of these materials can be used, for example, as the organic iodine remover 2. Oxide, hydroxide, carbonate, borate, phosphate, organic salt, an Mg/Al-based layered compound, or mixtures of these materials can be used, for example, as the alkalizing agent 3.

As relatively high-temperature gas flows into the filtered containment venting tank 1 in the event of an accident, organic iodine and inorganic iodine are supposed to be gaseous. Collecting gaseous iodine uses diffusiophoresis, thermophoresis, Brownian diffusion, and convection of iodine within air bubbles in liquid. The present embodiment is configured to contact the organic iodine remover 2 and the scrubbing water 13 with gaseous iodine, so that the organic iodine remover 2 and the scrubbing water 13 are desirably configured to have air bubbles staying in the liquid (bubbles contact with the liquid) for a long time. The longer bubbles stay in (contact with) the liquid, the more organic iodine reacts to the organic iodine remover 2 and is removed. To implement this, the present embodiment may be configured with distributed pipes, such as a sparger, at the other end of the inlet pipe 9 positioned down below within the filtered containment venting tank 1, for example, to generate a lot of fine bubbles.

Next, a description is given of a principle of action of the filtered containment venting system 30 according to the first embodiment, with reference to FIG. 1. Radioactive materials spewed from the reactor pressure vessel 34 to the containment 33 in the event of an accident are introduced to the dry well venting pipe 7 or wet well venting pipe 8, which is connected to the containment 33 upon the separation valve 5 or 6 being opened. The radioactive materials then flow via the inlet pipe 9 into the scrubbing water 13 within the filtered containment venting tank1. Alternatively, the scrubbing water 13 is generated within the filtered containment venting tank1 through condensation of steam and into which the radioactive materials flow via the inlet pipe 9. This results in inorganic iodine being collected in the scrubbing water 13.

At this time, the alkalizing agent 3 within the filtered containment venting tank 1 adds an action of buffering a pH value to the scrubbing water 13, to prevent variation in pH value of the scrubbing water 13 to avoid the scrubbing water 13 from being extremely acidified (pH 4 or less, for example) or alkalified (pH 12.5 or more, for example). Accordingly, the filtered containment venting system 30 prevents the organic iodine remover 2, contacting the scrubbing water 13, from being decomposed throughout predominant venting. Additionally, the alkalizing agent 3 is a compound to reduce and remove inorganic iodine, and adds an action of collecting inorganic iodine to the scrubbing water 13, as described above. Organic iodine not collected in the scrubbing water 13 flows to the organic iodine remover 2, which is hydrophobic, and is decomposed into iodide ion and collected. Aerosols as radioactive materials other than iodine are also collected by the scrubbing water 13 within the filtered containment venting tank1. After iodine has been collected, gas passes through the fiber filter 10 and outlet pipe 11 and is discharged outside from the exhaust tube 12 in a state of radioactive materials having been sufficiently removed.

Inorganic iodine is collected, as indicated by the following formula, with radioactive inorganic iodine (I₂) decomposed by at least one of the alkalizing agent 3 and scrubbing water 13 into radioactive iodide ion (I⁻) or iodate ion (IO₃⁻) (2: decomposition, as described above). This hold true for a case with chemical solution 4 included, as described below.

3I₂ + 6OH⁻ → 5I⁻ + IO₃⁻ + 3H₂O

Organic iodine is collected as indicated by the following formula, with radioactive organic iodine (RI) decomposed by the organic iodine remover 2 into radioactive iodide ion (I⁻). Note that "R" in the following formula indicates an organic material (hydrocarbon group) such as alkyl group (the same holds true hereinbelow).

X⁺-Y⁻ + RI → X⁺-Y⁻ + I⁻ + R⁺

Iodide ion is stabler in a liquid phase than organic iodine and interacts with a cation of the organic iodine remover 2 so as to be stably retained in a state of iodide ion. Accordingly, radioactive organic iodine is retained in a liquid phase and reliably prevented from leaking to the environment (3: retention, as described above). Only the organic iodine remover 2 can sufficiently collect organic iodine, but using the organic iodine remover 2 in conjunction with the alkalizing agent 3 prevents the organic iodine remover 2 from decomposition, to allow for keeping high performance of collecting organic iodine throughout venting.

A cation of the organic iodine remover 2 includes an organic cation such as phosphonium, sulfonium, ammonium, pyrrolidinium, piperidinium, and morpholinium. A cation of the organic iodine remover 2 only needs to have a cation structure of a phosphorus element, sulfur element, or nitrogen element, as a center, bonded with a substituent group such as mostly carbon. Preferably, the cation is mostly composed of a single-bonded carbon chain in order to retain high dissolvability of iodine, but may be partially cross-linked by double or triple bonds or oxygen elements. For example, methyl iodide as organic iodine does not dissolve in 1-butyl-3-methylimidazolium bis (trifluoromethyl sulfonyl) amide and separates, but dissolves and mixes uniformly in trihexyl (tetradecyl) phosphonium bis (trifluoromethyl sulfonyl) amide, having the same anionic structure as, and different cationic structure from, the former amide. A methyl group or the like as a material having a carbon chain length of 1 decomposes and volatilizes at a high temperature of 160°C, so that a carbon chain length of 2 or more is preferable. For example, 1-butyl-3-methylimidazolium iodide is known to have the methyl group of the cation desorbed at 160°C to undergo autolysis. From this perspective, an organic cation with a long and bulky carbon chain can highly dissolve organic iodine (1: dissolution, as described above) and has higher heat resistance, to allow for collecting organic iodine with high efficiency, and is thus preferable.

An anion of the organic iodine remover 2 includes an inorganic anion such as H₃C⁻ with an anion charge on a carbon element, and an organic anion such as H₂RC⁻, HR₂C⁻, R₃C⁻, NC⁻, and RCC⁻. An organic anion such as RS⁻ with an anion charge on a sulfur element is also included. An inorganic anion such as N₃⁻, H₂N⁻ with an anion charge on a nitrogen element and an organic anion such as HRN⁻, R₂N⁻ are also included. An organic anion such as RO⁻, RCO₂⁻, RPO₃⁻, RSO₃⁻, RPO₄⁻, R₂PO₂⁻, R₃CO⁻ with an anion charge on an oxygen element and an inorganic anion such as HO⁻, NO₂⁻, FO₃⁻, ClO₃⁻, BrO₃⁻, IO₃⁻, FO₄⁻, ClO₄⁻, BrO₄⁻, and IO₄⁻ are also included. An inorganic anion such as F⁻, Cl⁻, Br⁻, I⁻, F₃⁻, Cl₃⁻, Br₃⁻, and I₃⁻ with an anion charge on an halogen element is also included. As an anion of the organic iodine remover 2, an ion with high nucleophilicity is preferred in terms of strong action of decomposing organic iodine, especially one whose charged element is present at an end except for a hydrogen element. For example, an anion molecule having a charged nitrogen element as a center and elements other than hydrogen elements, such as R₂N⁻ (R-N⁻-R), is less nucleophilic than H₂N⁻, to have performance of decomposing iodide ion degraded. As an anion, H₃C⁻, H₂RC⁻, HR₂C⁻, R₃C⁻, NC⁻, RCC⁻, RS⁻, N₃⁻, H₂N⁻, HRN⁻, R₂N⁻, RO⁻, RCO₂⁻, RPO₃⁻, RSO₃⁻, RPO₄⁻, R₂PO₂⁻, R₃CO⁻, HO⁻, NO₂⁻, FO₃⁻, ClO₃⁻, BrO₃⁻, IO₃⁻, FO₄⁻, ClO₄⁻, BrO₄⁻, IO₄⁻, F⁻, Cl⁻, Br⁻, I⁻, F₃⁻, Cl₃⁻, Br₃⁻, I₃⁻, or the like is preferable in terms of high nucleophilicity, less causing hydrolysis, and less changing a pH value of the scrubbing water 13 when introduced into the filtered containment venting tank 1. For collecting organic iodine with high performance, not only dissolving (1: dissolution, as described above) iodine by cations of the organic iodine remover 2, but also decomposing iodine through nucleophilic attack on iodine by anions are required. Examples of the organic iodine remover 2 include trihexyl (tetradecyl) phosphonium chloride.

A compound of the alkalizing agent 3 includes MgO, CaO, SrO, Mg(OH)₂, Fe(OH)₂, CaMg(CO₃)₂, Na₂CO₃, NaHCOs, Na₂B₄O₇, Na₂B₁₀O₁₆, Na₂HPO₄, KH₂PO₄, C₈H₅KO₄, or Mg₆Al₂(OH)₁₆CO₃·mH₂O. When the alkalizing agent 3 is a solid such as MgO, MgO reacts with H₂O to form OH⁻, as shown in the following equation, so that a pH value increases but OH⁻ reacts with H⁺ to decrease a pH value. The reaction between MgO and H₂O reaches equilibrium at a pH value in a range of 10 to 11, having no more reaction between MgO and H₂O, so that a pH value does not increase any further. Accordingly, a pH value of the scrubbing water 13 is prevented from being extremely alkalified (pH 12.5 or more).

MgO(s) + H₂O → Mg²⁺ + 2OH⁻

2OH⁻ + 2H⁺ → 2H₂O

A content of the alkalizing agent 3 is preferably 400 ppm or more relative to the scrubbing water 13. Alternatively, the alkalizing agent 3 may be pH buffer solution with the content of the alkalizing agent 3 being 400 ppm or more relative to the scrubbing water 13. Either one of these allows the filtered containment venting system 30 to prevent the organic iodine remover 2 and a compound for reducing and removing inorganic iodine from being decomposed, throughout predominant venting, to have high performance of collecting organic iodine and inorganic iodine.

Next, advantageous effects of the present embodiment are described. The filtered containment venting system 30 according to the first embodiment, as described above, includes the filtered containment venting tank 1, the dry well venting pipe 7 and wet well venting pipe 8 coupled to the containment 33, the inlet pipe 9 with one end coupled to the dry well venting pipe 7 and wet well venting pipe 8 and the other end introduced into the filtered containment venting tank 1, and the outlet pipe 11 coupled to the fiber filter 10. Additionally, the filtered containment venting system 30 includes the hydrophobic organic iodine remover 2 within the filtered containment venting tank 1, for collecting organic iodine. The filtered containment venting system 30 also includes the scrubbing water 13 within the filtered containment venting tank 1, for collecting inorganic iodine. The filtered containment venting system 30 further includes the alkalizing agent 3 to add an action of buffering a pH value to the scrubbing water 13. The alkalizing agent 3 prevents the organic iodine remover 2 from being decomposed and prevents, through the action of buffering a pH value, a compound for reducing and removing inorganic iodine contained in the scrubbing water 13 (including not only the alkalizing agent 3 itself but also the chemical solution 4 to be described below) from being decomposed. As described above, the filtered containment venting system 30 according to the first embodiment prevents the organic iodine remover 2 from being decomposed, to retain high performance of collecting organic iodine throughout predominant venting, with only having the organic iodine remover 2, the scrubbing water 13, and the alkalizing agent 3 within the filtered containment venting tank 1 (that is, without any dry filter of silver zeolite or activated carbon provided on a vent path in a filtered containment venting system, as with a conventional system). In addition, the filtered containment venting system 30 according to the first embodiment adds an action of collecting inorganic iodine to the scrubbing water 13 by the alkalizing agent 3 containing a compound for reducing and removing inorganic iodine, and prevents the compound from being decomposed. Further, the organic iodine remover 2 is a liquid containing at least one of room temperature molten salt, ionic liquid, surfactant, quaternary salt, and correlation transfer catalyst. Ionic liquid of these materials is commercialized for general industry. The point of these materials is being involatile and has sufficient heat resistance even under the condition of a temperature of about 200°C, as a temperature of gas flowing into the filtered containment venting system 30 in the event of an accident. Ionic liquid also has a property of collecting a substrate, such as a radioactive material, within the ionic liquid at a high concentration. Especially, as organic iodine is poorly soluble in water and highly volatile, ionic liquid can be used as leading non-volatile liquid for collecting organic iodine, to have organic iodine collected with efficiency of 98% or more. Likewise, room temperature molten salt, surfactant, quaternary salt, or correlation transfer catalyst is suitably used as the organic iodine remover 2, to provide the same advantageous effects as ionic liquid. Additionally, the organic iodine remover 2 is a liquid remaining in a liquid phase even at a temperature of 200°C or more, so that the organic iodine remover 2 stably remains in a liquid phase even in the event of an accident, to sufficiently collect organic iodine.

A type of a reactor is not particularly limited in the present embodiment. The reactors include various types such as a Boiling Water Reactor (BWR), an Advanced Boiling Water Reactor (ABWR), and a Pressurized Water Reactor (PWR). Ionic liquid contaminated by radioactive materials may be treated and reprocessed using a method such as one disclosed in Japanese Translation of PCT International Application Publication No. 2003-507185 A.

### Second Embodiment

FIG. 2 is a schematic diagram showing a configuration of the filtered containment venting system 30 according to a second embodiment of the present invention. As shown in FIG. 2, the filtered containment venting system 30 according to the present embodiment is different from the filtered containment venting system 30 according to the first embodiment, shown in FIG. 1, on the point that the alkalizing agent 3 is liquid. Other components and actions are the same as those of the filtered containment venting system 30 according to the first embodiment as described above. Note that FIG. 2 does not show the scrubbing water 13, which is generated through condensation of steam introduced into the filtered containment venting tank1 in the event of venting. Having such a configuration prevents the alkalizing agent 3 from contacting the scrubbing water 13 before venting, to decompose the alkalizing agent 3.

### Third Embodiment

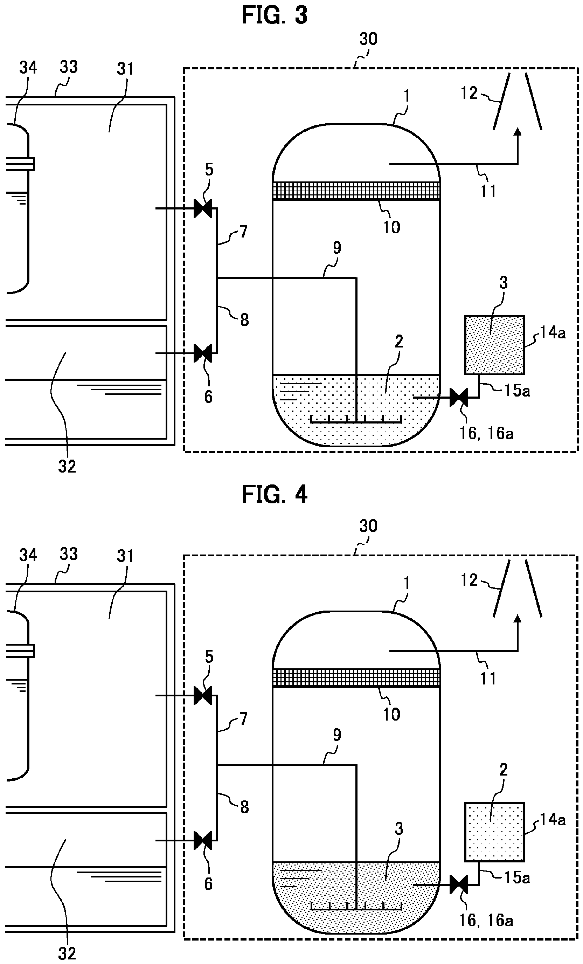

FIG. 3 is a schematic diagram showing a configuration example of the filtered containment venting system 30 according to a third embodiment of the present invention. FIG. 4 is a schematic diagram showing another configuration example of the filtered containment venting system 30 according to the third embodiment of the present invention. As shown in FIGS. 3 and 4, the filtered containment venting system 30 according to the present embodiment is different from the filtered containment venting system 30 according to the first embodiment, shown in FIG. 1, on the point that the former includes a first storage container 14a connected with the filtered containment venting tank 1 via an inlet valve 16 (particularly, first inlet valve 16a). That is, the filtered containment venting system 30 according to the present embodiment is different from the filtered containment venting system 30 according to the first embodiment on the point that the first storage container 14a is provided outside the filtered containment venting tank 1. Additionally, as shown in FIGS. 3 and 4, the filtered containment venting system 30 according to the present embodiment is different from the filtered containment venting system 30 according to the first embodiment on the point that the filtered containment venting tank 1 does not store the scrubbing water 13. Other components and actions are the same as those of the filtered containment venting system 30 according to the first embodiment as described above. Accordingly, the scrubbing water 13 is not stored in the filtered containment venting tank 1 until the event of venting. Note that the filtered containment venting tank 1 is connected with the first storage container 14a via a first inlet pipe 15a. The fist inlet valve 16a is provided in the first inlet pipe 15a.

The third embodiment allows for a mode having the organic iodine remover 2 within the filtered containment venting tank 1, and having the alkalizing agent 3 within the first storage container 14a, as shown in FIG. 3. Alternatively, the third embodiment allows for a mode having the alkalizing agent 3 within the filtered containment venting tank 1, and having the organic iodine remover 2 within the first storage container 14a, as shown in FIG. 4. In the modes of the filtered containment venting systems 30 according to the third embodiment, as shown in FIGS. 3 and 4, the organic iodine remover 2 and the alkalizing agent 3 are respectively stored in different containers. Accordingly, the organic iodine remover 2 and the alkalizing agent 3 are free from being decomposed during a long-term storage until the filtered containment venting systems 30 is used in the event of venting.

In the third embodiment, the first inlet valve 16a is opened in the event of venting at a timing before the separation valves 5 and 6 are opened. In this manner, the organic iodine remover 2 and alkalizing agent 3 are present in the filtered containment venting tank 1, just before steam is introduced from the containment 33 into the filtered containment venting system 30. Under the circumstances, the filtered containment venting system 30 has then steam containing radioactive materials introduced into the filtered containment venting tank 1 and condensed to generate the scrubbing water 13 (not shown in FIGS. 3 or 4) for treatment. Accordingly, the filtered containment venting system 30 reliably removes organic iodine by the organic iodine remover 2 and collects inorganic iodine by the scrubbing water 13.

### Fourth Embodiment

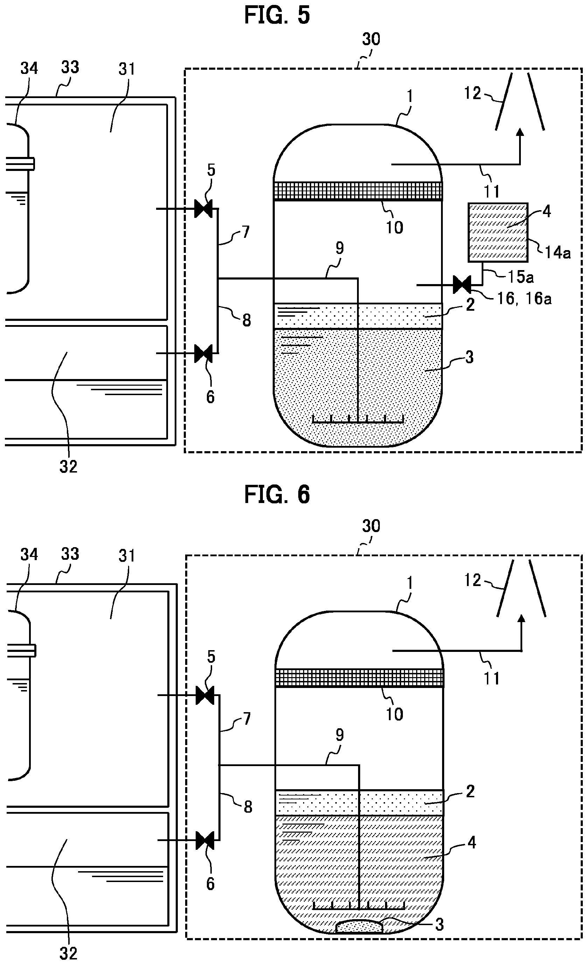

FIG. 5 is a schematic diagram showing a configuration example of the filtered containment venting system 30 according to a fourth embodiment of the present invention. As shown in FIG. 5, the filtered containment venting system 30 according to the present embodiment is different from the filtered containment venting system 30 according to the second embodiment, shown in FIG. 2, on the point that the former includes the first storage container 14a connected with the filtered containment venting tank 1 via the inlet valve 16 (particularly, first inlet valve 16a). In addition, the filtered containment venting system 30 according to the present embodiment is different from the filtered containment venting system 30 according to the second embodiment, shown in FIG. 2, on the point that the first storage container 14a is provided outside the filtered containment venting tank 1. Further, the filtered containment venting system 30 according to the present embodiment is different from the filtered containment venting system 30 according to the second embodiment on the point that the filtered containment venting tank 1 has the chemical solution 4 for enhancing performance of collecting inorganic iodine. Note that the chemical solution 4 is to be described in a fifth embodiment. Other components and actions are the same as those of the filtered containment venting system 30 according to the second embodiment as described above. The filtered containment venting tank 1 is connected with the first storage container 14a by the first inlet pipe 15a. The first inlet valve 16a is provided in the first inlet pipe 15a.

The fourth embodiment may have a mode (i) of having the organic iodine remover 2 and alkalizing agent 3 in the filtered containment venting tank 1 and having the chemical solution 4 in the first storage container 14a. In this mode, the alkalizing agent 3 may be either solid or liquid (FIG. 5 shows the alkalizing agent 3 of liquid). Alternatively, the fourth embodiment may have a mode (ii) of having the alkalizing agent 3 and chemical solution 4 in the filtered containment venting tank 1 and having the organic iodine remover 2 in the first storage container 14a. In this mode, the alkalizing agent 3 may also be either solid or liquid. Alternatively, the fourth embodiment may have a mode (iii) of having the organic iodine remover 2 and chemical solution 4 in the filtered containment venting tank 1 and having the alkalizing agent 3 in the first storage container 14a. In this mode, the alkalizing agent 3 may also be either solid or liquid. Note that FIG. 5 shows the mode (i) as a representative of these modes (modes (ii) and (iii) are not shown). In the modes of the filtered containment venting system 30 according to the fourth embodiment, as shown in FIG. 5, one of the organic iodine remover 2, alkalizing agent 3, and chemical solution 4 is stored in a container different from those for the other two. Accordingly, these elements are free from being decomposed during a long-term storage until the filtered containment venting systems 30 is used in the event of an accident.

In the fourth embodiment, the first inlet valve 16a is opened in the event of venting at a timing before the separation valves 5 and 6 are opened, as in the third embodiment. In this manner, the organic iodine remover 2, chemical solution 4, and alkalizing agent 3 are stored in the filtered containment venting tank 1, just before steam is introduced from the containment 33 into the filtered containment venting system 30. Under the circumstances, the filtered containment venting system 30 then has steam containing radioactive materials introduced into the filtered containment venting tank 1 and condensed to generate the scrubbing water 13 (not shown in FIGS. 3 or 4) for treatment. Accordingly, the filtered containment venting system 30 reliably removes organic iodine by the organic iodine remover 2 and collects inorganic iodine by the scrubbing water 13 and chemical solution 4.

### Fifth Embodiment

FIG. 6 is a schematic diagram showing a configuration of the filtered containment venting system 30 according to a fifth embodiment of the present invention. As shown in FIG. 6, the filtered containment venting system 30 according to the present embodiment is different from the filtered containment venting system 30 according to the first embodiment, shown in FIG. 1, on the point that the former has the chemical solution 4 filled in the filtered containment venting tank 1 in place of the scrubbing water 13. Other components and actions are the same as those of the filtered containment venting system 30 according to the first embodiment as described above.

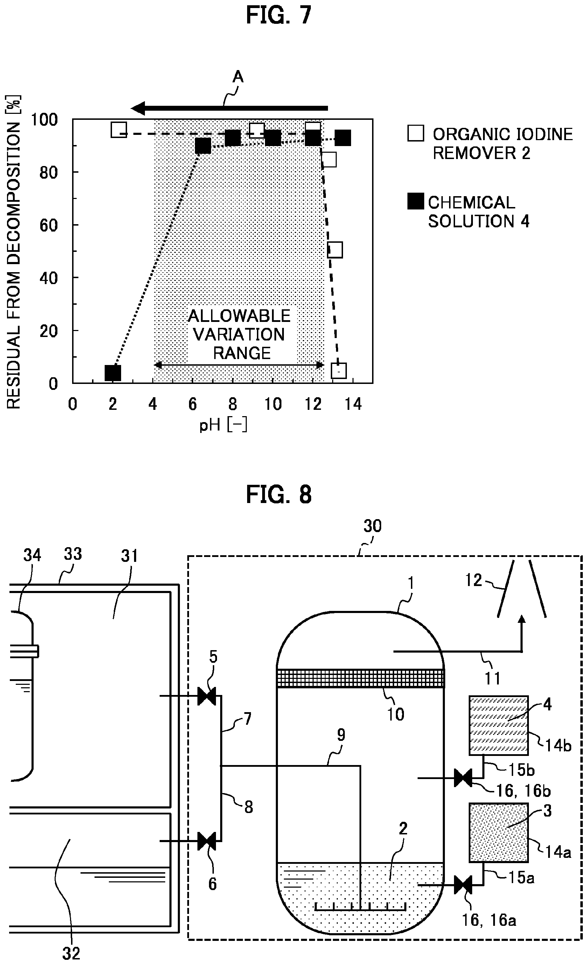

The chemical solution 4 is a basic compound having no action of buffering a pH value and works as a reducing agent. The chemical solution 4 may be replaced by a mixture of the chemical solution 4 and alkalizing agent 3. The chemical solution 4 includes a hydroxide such as NaOH, KOH, NH₂OH, and N₂H₅OH and a compound of nitrogen and sulfur such as (NH₄)₂S, H₂NC₂H₄SH, and acts to enhance performance of collecting iodine. FIG. 7 is a chart showing decomposition performance of the organic iodine remover 2 and chemical solution 4. Under high-temperature irradiation, decomposition of the organic iodine remover 2 is accelerated when a pH value goes over 12, while decomposition of the chemical solution 4 is accelerated when a pH value goes under 6 or near-neutral condition. In order to prevent decomposition of both the organic iodine remover 2 and chemical solution 4, an equilibrium PH value of the alkalizing agent 3 is preferably retained in a range of 4 to 12.5 (allowable variation range of pH) throughout predominant venting under high-temperature and high-dose radiation, as shown in FIG. 7. The alkalizing agent 3 assuming an action of retaining a pH value in a range of 4 to 12.5 allows for retaining an action of collecting inorganic iodine by the chemical solution 4 at a high level and retaining an action of removing organic iodine by the organic iodine remover 2 at a high level. Note that if the chemical solution 4, scrubbing water 13, and organic iodine remover 2 are exposed without the alkalizing agent 3 to high-temperature and high-dose radiation, pH values thereof are reduced, as indicated by a thick arrow A.

### Sixth Embodiment

FIG. 8 is a schematic diagram showing a configuration example of the filtered containment venting system 30 according to a sixth embodiment of the present invention. As shown in FIG. 8, the filtered containment venting system 30 according to the present embodiment has the first storage container 14a and a second storage container 14b provided outside the filtered containment venting tank 1. In particular, the filtered containment venting system 30 according to the present embodiment includes the first storage container 14a connected via the inlet valve 16 (first inlet valve 16a) with the filtered containment venting tank 1 and the second storage container 14b connected via the inlet valve 16 (second inlet valve 16b) with the filtered containment venting tank 1. That is, the filtered containment venting system 30 according to the present embodiment is different from the filtered containment venting system 30 according to the third embodiment, shown in FIG. 3, on the point that the former includes the second storage container 14b connected via the second inlet valve 16b with the filtered containment venting tank 1. Other components and actions are the same as those of the filtered containment venting system 30 according to the third embodiment as described above.

Note that the filtered containment venting tank 1 is connected with the first storage container 14a via the first inlet pipe 15a, as in the third embodiment. The first inlet valve 16a is provided in the first inlet pipe 15a. The filtered containment venting tank 1 is connected with the second storage container 14b via the second inlet pipe 15b. The second inlet valve 16b is provided in the second inlet pipe 15b. That is, the sixth embodiment has the first storage container 14a and second storage container 14b individually connected via the respective inlet valves 16 (particularly, the first inlet valve 16a and second inlet valve 16b) with the filtered containment venting tank 1. In this manner, the first inlet valve 16a and second inlet valve 16b are suitably opened in the event of venting to individually introduce the alkalizing agent 3 stored in the first storage container 14a and the chemical solution 4 stored in the second storage container 14b into the filtered containment venting tank 1.

The sixth embodiment has each of the filtered containment venting tank 1, first storage container 14a, and second storage container 14b storing one selected only once from a group consisting of the organic iodine remover 2, alkalizing agent 3, and chemical solution 4. FIG. 8 shows one of the modes as a representative, in which the filtered containment venting tank 1 stores the organic iodine remover 2, the first storage container 14a stores the alkalizing agent 3, and the second storage container 14b stores the chemical solution 4. In the modes of the filtered containment venting system 30 according to the sixth embodiment, the organic iodine remover 2, alkalizing agent 3, and chemical solution 4 are stored in containers different from each other, and are free from being decomposed during a long-term storage until the filtered containment venting systems 30 is used in the event of an accident (in the event of venting).

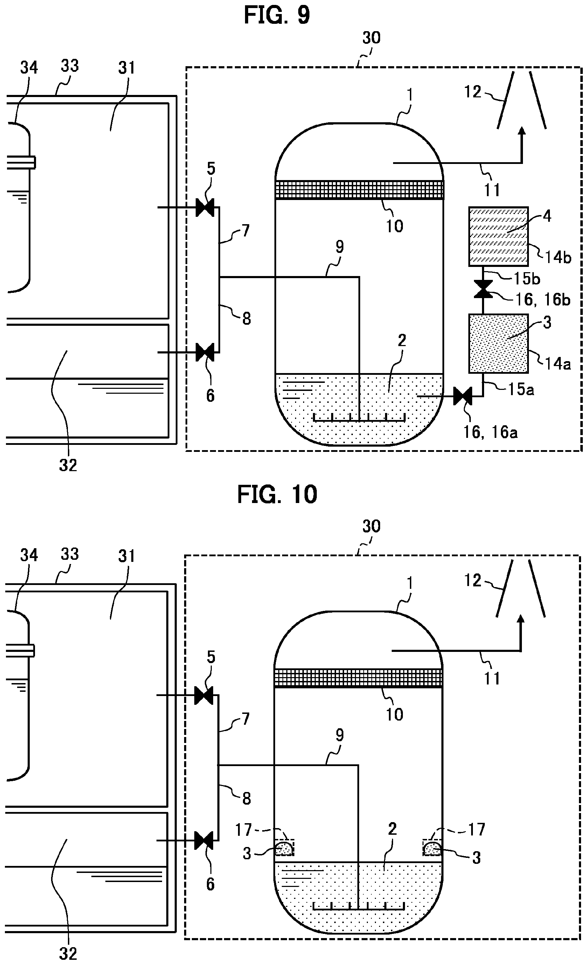

FIG. 9 is a schematic diagram showing another configuration example of the filtered containment venting system 30 according to the sixth embodiment of the present invention. The filtered containment venting system 30 in FIG. 9 is different from the filtered containment venting system 30 in FIG. 8 on the point that the second storage container 14b is connected with the first storage container 14a via the inlet valve 16 (particularly, the second inlet valve 16b) and the first storage container 14a is connected with the filtered containment venting tank 1 via the inlet valve 16 (particularly, the first inlet valve 16a). That is, the filtered containment venting system 30 in FIG. 9 has the first storage container 14a serially connected with the second storage container 14b. Other components and actions are the same as those of the filtered containment venting system 30 in FIG. 8 as described above. The filtered containment venting system 30 in FIG. 9 being configured as described above allows the chemical solution 4 to be flowed to the solid alkalizing agent 3, for example, to have both easily introduced into the filtered containment venting tank 1.

### Seventh Embodiment

FIG. 10 is a schematic diagram showing a configuration of the filtered containment venting system 30 according to a seventh embodiment of the present invention. As shown in FIG. 10, the filtered containment venting system 30 according to the seventh embodiment is different from the filtered containment venting system 30 according to the third embodiment in FIG. 3 on the point that the former includes a mesh container 17 in the filtered containment venting tank 1, in place of the first storage container 14a, to have the alkalizing agent 3 provided in the mesh container 17. The mesh container 17 is positioned higher in the filtered containment venting tank 1 than liquid level of the organic iodine remover 2. Other components and actions are the same as those of the filtered containment venting system 30 according to the third embodiment as described above.

The filtered containment venting system 30 according to the seventh embodiment has a simple structure, as compared with a mode of having the first storage container 14a outside the filtered containment venting tank 1 and having the alkalizing agent 3 within the first storage container 14a, as with the filtered containment venting system 30 according to the third embodiment. In the event of venting, steam is introduced into the filtered containment venting tank 1 and condensed as the scrubbing water 13, to have liquid level raised to dissolve the alkalizing agent 3 in liquid. Accordingly, the filtered containment venting system 30 according to the seventh embodiment is free from operation of opening the first inlet valve 16a (introduction work), as compared with the filtered containment venting system 30 according to the third embodiment. This allows the filtered containment venting system 30 according to the seventh embodiment to be readily operated yet to reliably remove organic iodine by the organic iodine remover 2 and collect inorganic iodine by the scrubbing water 13.

Next, a description is given of a principle of action of the filtered containment venting system 30 according to the seventh embodiment, with reference to FIG. 10. Radioactive materials spewed from the reactor pressure vessel 34 to the containment 33 in the event of an accident are introduced to the dry well venting pipe 7 or wet well venting pipe 8, which is connected to the containment 33 upon the separation valve 5 or 6 being opened. The radioactive materials are then introduced via the inlet pipe 9 into the filtered containment venting tank1 and steam is condensed to generate the scrubbing water 13 (not shown in FIG. 10), to have liquid level of the scrubbing water 13 raised to cause the alkalizing agent 3 to contact the scrubbing water 13. The alkalizing agent 3 contacting the scrubbing water 13 allows the scrubbing water 13 to have an equilibrium pH value of the alkalizing agent 3, without a pH value of the scrubbing water 13 becoming excessively high. Inorganic iodine is collected in the scrubbing water 13. The alkalizing agent 3 within the filtered containment venting tank 1 has an action of buffering a pH value, so that the scrubbing water 13 is avoided from a pH value thereof being varied to become extremely acidified (pH 4 or less, for example) or alkalified (pH 12.5 or more, for example), to prevent the organic iodine remover 2, contacting the scrubbing water 13, from being decomposed throughout predominant venting.

Additionally, the present embodiment allows the chemical solution 4 to be provided in the mesh container 17 or a mixture of the alkalizing agent 3 and the chemical solution 4 to be provided in the mesh container 17 (none of these modes are shown in FIG. 10). When these modes are employed, a mesh structure may be used for a lid but may not be used for a bottom and side walls, for example. These modes also enhance performance of collecting organic iodine and inorganic iodine.

Hereinabove, the filtered containment venting system according to the present invention has been described in detail, through embodiments, but the present invention is not limited to the embodiments as described above and includes various modifications. For example, the embodiments have been described in detail to illustrate the present invention, but are not limited to those having all components as described above. A configuration of an embodiment may partly be replaced with a configuration of another embodiment, and a configuration of an embodiment may be added with a configuration of another embodiment. A configuration of the embodiments may partly be deleted or added/replaced with another configuration.

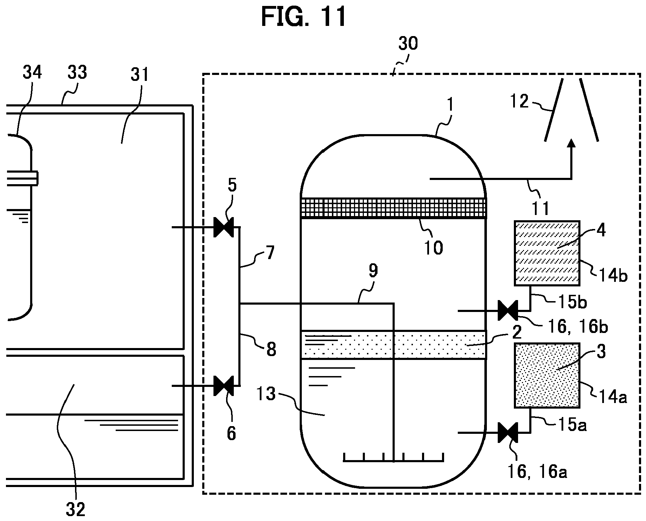

For example, FIG. 11 is a schematic diagram showing a modification of the filtered containment venting system 30 according to the present invention. As shown in FIG. 11, the filtered containment venting tank 1 of the filtered containment venting system 30 may include the organic iodine remover 2, the alkalizing agent 3, the scrubbing water 13, and the chemical solution 4. In particular, the filtered containment venting tank 1 may be configured to have therein the organic iodine remover 2 and scrubbing water 13, to store the alkalizing agent 3 in the first storage container 14a, and to store the chemical solution 4 in the second storage container 14b, as shown in FIG. 11. The mode in FIG. 11 has the first storage container 14a connected by the first inlet pipe 15a via the inlet valve 16 (particularly, the first inlet valve 16a) with the filtered containment venting tank 1. The mode has the second storage container 14b connected by the second inlet pipe 15b via the inlet valve 16 (particularly, the second inlet valve 16b) with the filtered containment venting tank 1. This modification has the alkalizing agent 3 and chemical solution 4 stored in the respective containers different from the filtered containment venting tank 1. Accordingly, the filtered containment venting system 30 according to the modification is free from the alkalizing agent 3 and chemical solution 4 being decomposed during a long-term storage until the filtered containment venting systems 30 is used in the event of an accident (in the event of venting)

In addition, an embodiment may include a scrubbing-water container connected via an inlet pipe and an inlet valve (none of them are shown), provided in the inlet pipe, with the filtered containment venting tank 1, even though not shown, wherein the scrubbing-water container stores the scrubbing water 13. In this manner, the filtered containment venting system 30 allows for swiftly introducing the scrubbing water 13 into the filtered containment venting tank 1, in the event of venting, to prepare for collecting inorganic iodine.

### LEGEND FOR REFERENCE NUMERALS

1: filtered containment venting tank, 2: organic iodine remover, 3: alkalizing agent, 4: chemical solution, 5: separation valve, 6: separation valve, 7: dry well venting pipe, 8: wet well venting pipe, 9: inlet pipe, 10: fiber filter, 11: outlet pipe, 12: exhaust tube, 13: scrubbing water, 14a: first storage container, 14b: second storage container, 15a: first inlet pipe, 15b:, 16: inlet valve, 16a: first inlet valve, 16b: second inlet valve, 17:, 30: filtered containment venting system, 31: dry well, 32: wet well, 33: containment, and 34: reactor pressure vessel.

## Claims

1. A filtered containment venting system (30) comprising a filtered containment venting tank (1) including:
an organic iodine remover (2) for collecting organic iodine;
scrubbing water (13) for collecting inorganic iodine; and
an alkalizing agent (3) for adding an action of buffering a pH value to the scrubbing water (13).

2. A filtered containment venting system (30) comprising a filtered containment venting tank (1) including:
an organic iodine remover (2) for collecting organic iodine; and
an alkalizing agent (3) for adding an action of buffering a pH value to the scrubbing water (13) used to collect inorganic iodine.

3. The filtered containment venting system (30) according to claim 1 or 2,
wherein the filtered containment venting tank (1) further includes chemical solution (4) for enhancing an action of collecting the inorganic iodine.

4. The filtered containment venting system (30) according to claim 1 or 2,
wherein the filtered containment venting tank (1) has therein the organic iodine remover (2) and the alkalizing agent (3).

5. The filtered containment venting system (30) according to claim 1, further comprising a first storage container (14a) and a second storage container (14b) connected via inlet valves (16) with the filtered containment venting tank (1), wherein
the filtered containment venting tank (1) has therein the scrubbing water (13) and the organic iodine remover (2),
the first storage container (14a) stores the alkalizing agent (3), and
the second storage container (14b) stores chemical solution (4) for enhancing an action of collecting the inorganic iodine.

6. The filtered containment venting system (30) according to claim 3,
wherein the filtered containment venting tank (1) has therein the chemical solution (4).

7. The filtered containment venting system (30) according to claim 2, further comprising a first storage container (14a) connected via an inlet valve (16) with the filtered containment venting tank (1), wherein
the filtered containment venting tank (1) has therein the organic iodine remover (2) and the first storage container (14a) has therein the alkalizing agent (3), or
the filtered containment venting tank (1) has therein the alkalizing agent (3) and the first storage container (14a) has therein the organic iodine remover (2).

8. The filtered containment venting system (30) according to claim 3, further comprising a first storage container (14a) connected via an inlet valve (16) with the filtered containment venting tank (1), wherein
the filtered containment venting tank (1) has therein the organic iodine remover (2) and the alkalizing agent (3), and the first storage container (14a) has therein the chemical solution (4), or
the filtered containment venting tank (1) has therein the alkalizing agent (3) and the chemical solution (4), and the first storage container (14a) has therein the organic iodine remover (2), or
the filtered containment venting tank (1) has therein the organic iodine remover (2) and the chemical solution (4), and the first storage container (14a) has therein the alkalizing agent (3).

9. The filtered containment venting system (30) according to claim 3, further comprising a first storage container (14a) and a second storage container (14b) connected via inlet valves (16) with the filtered containment venting tank (1), wherein
each of the filtered containment venting tank (1), the first storage container (14a), and the second storage container (14b) stores one selected only once from a group consisting of the organic iodine remover (2), the alkalizing agent (3), and the chemical solution (4).

10. The filtered containment venting system (30) according to claim 9, wherein
the first storage container (14a) and second storage container (14b) are individually connected via the respective inlet valves (16) with the filtered containment venting tank (1), or
the second storage container (14b) is connected with the first storage container (14a) via one of the inlet valves (16) and the first storage container (14a) is connected with the filtered containment venting tank (1) via the other of the inlet valves (16).

11. The filtered containment venting system (30) according to claim 7, wherein
the first storage container (14a) is provided outside the filtered containment venting tank (1).

12. The filtered containment venting system (30) according to claim 8, wherein
the first storage container (14a) is provided outside the filtered containment venting tank (1).

13. The filtered containment venting system (30) according to claim 9, wherein
the first storage container (14a) and second storage container (14b) are provided outside the filtered containment venting tank (1).

14. The filtered containment venting system (30) according to claim 10, wherein
the first storage container (14a) and second storage container (14b) are provided outside the filtered containment venting tank (1).

15. The filtered containment venting system (30) according to claim 3, wherein
the chemical solution (4) is a basic compound having no action of buffering a pH value.

16. The filtered containment venting system (30) according to claim 1, wherein
a content of the alkalizing agent (3) is 400 ppm or more relative to the scrubbing water (13).

17. The filtered containment venting system (30) according to claim 1 or 2, wherein an equilibrium PH value of the alkalizing agent (3) is in a range between 4 and 12.5.
